# EUROPÄISCHE PATENTSCHRIFT

(11) **EP 4 102 684 B1**
(45) Veröffentlichungstag und Bekanntmachung des Hinweises auf die Patenterteilung: **03.07.2024**
(21) Anmeldenummer: 22020057.0
(22) Anmeldetag: 17.02.2022
(51) Int. Cl.: H02K 1/20, H02K 3/24, H02K 9/197

(54) **STATOR FÜR EINE ELEKTRISCHE MASCHINE, ELEKTRISCHE MASCHINE, KRAFTFAHRZEUG**
STATOR FOR AN ELECTRIC MACHINE, ELECTRIC MACHINE AND VEHICLE
STATOR POUR UNE MACHINE ÉLECTRIQUE, MACHINE ÉLECTRIQUE, VÉHICULE AUTOMOBILE

(30) Priorität: 08.06.2021 DE 102021114737
(43) Veröffentlichungstag der Anmeldung: 14.12.2022
(73) Patentinhaber: Dr. Ing. h.c. F. Porsche Aktiengesellschaft, 70435 Stuttgart (DE)
(72) Erfinder: Engelhardt, Tobias, 70193 Stuttgart (DE); Oechslen, Stefan, 70176 Stuttgart (DE)

(56) Entgegenhaltungen:
- EP-A1- 3 223 394
- WO-A1-2019/183657
- US-A1- 2020 153 306

## Beschreibung

Die vorliegende Erfindung betrifft einen Stator für eine elektrische Maschine nach dem Oberbegriff des Anspruchs 1.

Elektrische Maschinen, insbesondere hochperformante elektrische Maschinen, müssen im Betrieb gekühlt werden. Typischerweise ist die Temperaturverträglichkeit von Komponenten der elektrischen Maschine leistungslimitierend, wodurch der Kühlung besondere Aufmerksamkeit zukommt. Als besonders effektiv hat sich erwiesen, die elektrischen Leiter des Stators einer elektrischen Maschine direkt mit einer Kühlflüssigkeit, beispielsweise mit einem Öl, zu beaufschlagen. Hierzu wird die Kühlflüssigkeit üblicherweise in einen Wickelkopfbereich des Stators eingeleitet. Die Kühlflüssigkeit strömt weiter entlang der elektrischen Leiter durch Statornuten des Stators bis in einen weiteren Wickelkopfbereich. Dort kann die Kühlflüssigkeit aus dem Stator austreten und die von der Kühlflüssigkeit aufgenommene Wärme abgeführt werden.

Das beschriebene Verfahren aus dem Stand der Technik ist zwar sehr effizient, allerdings bewirkt die Passage der Kühlflüssigkeit durch die Statornuten entlang der elektrischen Leitungen einen hohen Strömungswiderstand, was entsprechend starke Pumpen zur Erzeugung des Kühlflüssigkeitsstromes erfordert und zu hohen Kosten, einem hohen Gewicht und einem großen benötigten Bauraum der Pumpen führt.

WO 2019/ 183 657 A1 offenbart einen Stator einer elektrischen Maschine, wobei in Nutschlitzen desselben eine Vergussmasse aufgenommen ist. Radial innen oder radial außen ist ein Kühlmittelkanal vorgesehen, der die Breite der elektrischen Leitern aufweist.

EP 3 223 394 A1 und US 2020 / 0 153 306 A1 offenbaren weiteren Stand der Technik Aus der EP 3 223 394 A1 sind die Merkmale des Oberbegriffs von Anspruch 1 bekannt.

Es ist daher eine Aufgabe der vorliegenden Erfindung, einen Stator für eine elektrische Maschine zur Verfügung zu stellen, welcher die genannten Nachteile des Standes der Technik nicht aufweist, sondern die Verwendung von kleineren und damit leichteren und günstigeren Pumpen zur Erzeugung des Kühlflüssigkeitsstromes erlaubt.

Diese Aufgabe wird gelöst durch einen Stator für eine elektrische Maschine nach Anspruch 1.

Es ist vorgesehen, dass die Kühlkanäle in Nutschlitzen des Statorblechpakets und in jochseitigen Aussparungen des Statorblechpakets angeordnet sind, wobei die Kühlkanäle und die jochseitigen Aussparungen in Umlaufrichtung weniger Ausdehnung aufweisen als die elektrischen Leiter. Dann, wenn die Kühlkanäle in Nutschlitzen des Statorblechpakets angeordnet sind, ist hierdurch auf vorteilhafte Weise erfindungsgemäss eine Anordnung der Kühlkanäle mit nur geringen bzw. ohne Beeinträchtigung der elektromagnetischen Eigenschaften des Stators möglich. Denkbar ist, dass die Kühlkanäle als Ausbuchtungen der Nutisolationen in die Nutschlitze vorgesehen sind.

Dann, wenn die Kühlkanäle in jochseitigen Aussparungen des Statorblechpakets angeordnet sind, ist ergibt sich hierdurch auf vorteilhafte Weise erfindungsgemäss eine sehr gute Kühlung an der jochseitigen Seite der elektrischen Leitungen.

Es ist vorgesehen, dass die Kühlkanäle und die jochseitigen Aussparungen in Umlaufrichtung des Statorblechpakets in Umfangsrichtung weniger Ausdehnung aufweisen als die elektrischen Leiter, Dadurch wird sichergestellt, dass die Kühlkanäle und auch die Aussparungen in Umlaufrichtung des Statorblechpakets die elektrischen Leiter nicht überragen.

Der erfindungsgemäße Stator ermöglicht die Verwendung kleinerer Pumpen, welche deutlich leichter und günstiger sind. Durch die Kühlkanäle wird der Strömungswiderstand merklich gesenkt, gleichzeitig die Effizienz der Kühlung der elektrischen Leiter kaum und insbesondere die Effizienz der Kühlung der Wickelköpfe gar nicht beeinträchtigt. Ferner führt der geringere Strömungswiderstand zu einer deutlich verlängerten Lebensdauer der Pumpen.

Vorzugsweise ist vorgesehen, dass die elektrischen Leiter Leiterschienen mit insbesondere rechteckigem Querschnitt sind: Besonders bevorzugt sind die elektrischen Leiter Hairpin-Elemente.

Vorzugsweise ist vorgesehen, dass die Nutisolationen aus PEEK hergestellt sind. Denkbar ist, dass die Nutisolationen in die Statornuten eingeschoben sind. Denkbar ist aber auch, dass die Nutisolationen in die Statornuten laminiert oder gespritzt sind.

Die Verwendung von Nutisolationen macht es möglich, dass das Statorblechpaket stanzpaketiert ist. Denkbar ist aber auch, dass das Statorblechpaket mittels Schweißen, bevorzugt Laserschweißen, entlang des Statorrückens oder mittels des Auftragens eines Backlacks paketiert ist.

Vorzugsweise ist vorgesehen, dass der Stator ein Stator eines Innenläufers ist.

Vorteilhafte Ausgestaltungen und Weiterbildungen der Erfindung sind den Unteransprüchen, sowie der Beschreibung unter Bezugnahme auf die Zeichnungen entnehmbar.

Gemäß einer weiteren bevorzugten Ausführungsform der Erfindung ist vorgesehen, dass die elektrischen Leiter in Innenräumen der Nutisolationen angeordnet sind, wobei die Kühlkanäle mit den Innenräumen fluidisch verbunden sind. Hierdurch ist auf vorteilhafte Weise ermöglicht, dass die Kühlflüssigkeit sowohl durch die Kühlkanäle, als auch durch die Innenräume strömt und dabei bei geringem Strömungswiderstand die elektrischen Leiter direkt mit der Kühlflüssigkeit beaufschlagt und somit gekühlt werden.

Gemäß einer weiteren bevorzugten Ausführungsform der Erfindung ist vorgesehen, dass die elektrischen Leiter in Innenräumen der Nutisolationen angeordnet sind, wobei die Kühlkanäle von den Innenräumen fluidisch dicht getrennt sind. Mit anderen Worten werden die elektrischen Leiter indirekt gekühlt. Durch die fluidische Trennung der Kühlkanäle von den Innenräumen ist eine sehr stabile Struktur der Nutisolationen ermöglicht. Vorzugsweise zur Trennung der Kühlkanäle von den Innenräumen vorgesehene Trennwände versteifen die Nutisolationen, was zu einem deutlich verbesserten Handling bei der Fertigung des Stators führt.

Gemäß einer weiteren bevorzugten Ausführungsform der Erfindung ist vorgesehen, dass der Stator an einer Stirnseite des Statorblechpakets eine Stirnscheibe aufweist, wobei die Stirnscheibe einen radialen Teil aufweist, wobei eine Haupterstreckungsrichtung des radialen Teils in der radialen Richtung angeordnet ist, wobei der radiale Teil Öffnungen zum Durchführen der elektrischen Leitungen durch den radialen Teil von den Statornuten in einen Wickelkopfbereich des Stators und weitere Öffnungen zum fluidischen Verbinden der Kühlkanäle mit dem Wickelkopfbereich aufweist. Hierdurch ist ein Abschluss des Wickelkopfraumes zum Statorblechpaket hergestellt, durch welchen verhindert werden kann, dass Kühlflüssigkeit aus dem Wickelkopfbereich in den Luftspalt der elektrischen Maschine zwischen Rotor und Stator gelangt und dort zu starken Reibungsverlusten führt.

Vorzugsweise ist vorgesehen, dass die Stirnscheibe fluiddicht an der Stirnseite befestigt ist, so dass keine Kühlflüssigkeit zwischen Stirnscheibe und Stirnseite gelangen kann. Hierzu ist vorzugsweise vorgesehen, dass die Stirnscheibe selbst fluiddicht ist.

Vorzugsweise ist vorgesehen, dass die Stirnscheibe aus einem elektrisch isolierenden Material hergestellt ist. Denkbar ist, dass die Stirnscheibe aus einem Kunststoff, vorzugsweise aus einem faserverstärkten Kunststoff hergestellt ist.

Gemäß einer weiteren bevorzugten Ausführungsform der Erfindung ist vorgesehen, dass die Öffnungen fluiddichte Abdichtungen zwischen dem Wickelkopfraum und den Innenräumen der Kühlkanäle aufweisen. Hierdurch ist auf vorteilhafte Weise sichergestellt, dass, insbesondere bei indirekter Kühlung der elektrischen Leiter in den Statornuten, keine Kühlflüssigkeit aus.dem Wickelkopfbereich in die Innenräume gelangt.

Gemäß einer weiteren bevorzugten Ausführungsform der Erfindung ist vorgesehen, dass Ränder der Öffnungen mit Rändern der Nutisolationen fluiddicht verbunden sind, wobei die Ränder der Öffnungen bevorzugt mit den Rändern der Nutisolationen verschweißt, verklebt oder an die Ränder der Nutisolationen angespritzt sind. Hierdurch ist auf vorteilhafte Weise sichergestellt, dass keine Kühlflüssigkeit an den Öffnungen zwischen die Stirnscheibe und die Stirnseite und von dort aus in den Luftspalt gelangt.

Vorzugsweise ist vorgesehen, dass Ränder der weiteren Öffnungen mit Rändern der Nutisolationen, insbesondere mit Rändern der Kühlkanäle, fluiddicht verbunden sind, wobei die Ränder der Öffnungen bevorzugt mit den Rändern der Nutisolationen verschweißt, verklebt oder an die Ränder der Nutisolationen angespritzt sind.

Gemäß einer weiteren bevorzugten Ausführungsform der Erfindung ist vorgesehen, dass die Stirnscheibe einen axialen Teil aufweist, wobei eine Haupterstreckungsrichtung des axialen Teils in der axialen Richtung angeordnet ist, wobei der axiale Teil Kanäle aufweist, wobei die Kanäle entlang einer Haupterstreckungsrichtung der Kühlkanäle angeordnet sind. Hierdurch ist auf vorteilhafte Weise bewirkt, dass kein zusätzliches Spaltrohr zur Abdichtung des Luftspaltes vorgesehen werden muss. Gleichzeitig bewirken die Kanäle, dass der Strömungswiderstand nicht durch den axialen Teil erhöht wird.

Denkbar ist aber auch, dass der Stator und/oder vorzugsweise die elektrische Maschine ein Spaltrohr aufweist, wobei das Spaltrohr Kanäle aufweist, wobei die Kanäle entlang einer Haupterstreckungsrichtung der Kühlkanäle angeordnet sind.

Gemäß einer weiteren bevorzugten Ausführungsform der Erfindung ist vorgesehen, dass die Stirnscheibe, insbesondere der radiale Teil, mit der Stirnseite des Statorblechpakets verklebt oder an die Stirnseite des Statorblechpakets angespritzt ist. Dies bewirkt auf vorteilhafte Weise eine sehr gute Abdichtung zur Verhinderung des Austretens von Kühlflüssigkeit aus dem Wickelkopfraum in einen Bereich zwischen der Stirnscheibe und der Stirnseite.

Ein weiterer Gegenstand der vorliegenden Erfindung zur Lösung der eingangs formulierten Aufgabe ist eine elektrische Maschine aufweisend einen erfindungsgemäßen Stator.

Ein weiterer Gegenstand der vorliegenden Erfindung zur Lösung der eingangs formulierten Aufgabe ist ein Kraftfahrzeug aufweisend eine erfindungsgemäße elektrische Maschine.

Alle zuvor im Zusammenhang mit dem erfindungsgemäßen Stator offenbarten Einzelheiten, Merkmale und Vorteile beziehen sich gleichfalls auf die erfindungsgemäße elektrische Maschine sowie auf das erfindungsgemäße Kraftfahrzeug.

Weitere Einzelheiten, Merkmale und Vorteile der Erfindung ergeben sich aus den Zeichnungen sowie aus der nachfolgenden Beschreibung von bevorzugten Ausführungsformen anhand der Zeichnungen. Die Zeichnungen illustrieren dabei lediglich beispielhafte Ausführungsformen der Erfindung.
**Fig. 1 (a)** und **(b)** illustrieren jeweils schematisch ein Detail eines Stators gemäß einer beispielhaften Ausführungsform der vorliegenden Erfindung.
**Fig. 2** illustriert schematisch ein Detail eines Stators gemäß einer beispielhaften Ausführungsform der vorliegenden Erfindung.
**Fig. 3** illustriert schematisch ein Kraftfahrzeug gemäß einer beispielhaften Ausführungsform der vorliegenden Erfindung mit einer elektrischen Maschine gemäß einer beispielhaften Ausführungsform der vorliegenden Erfindung.

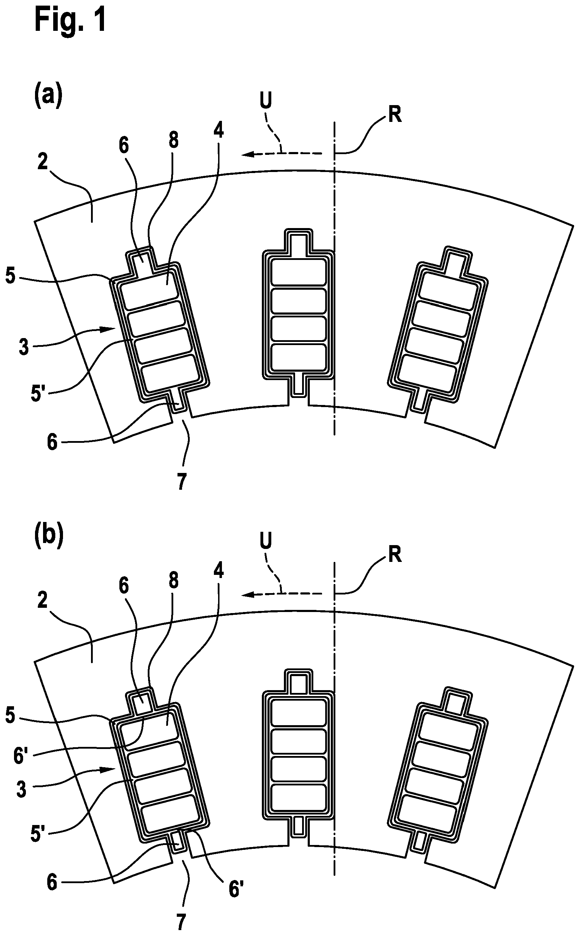

**Fig. 1 (a)** und **(b)** illustrieren jeweils schematisch ein Detail eines Stators 1 gemäß einer beispielhaften Ausführungsform der vorliegenden Erfindung.

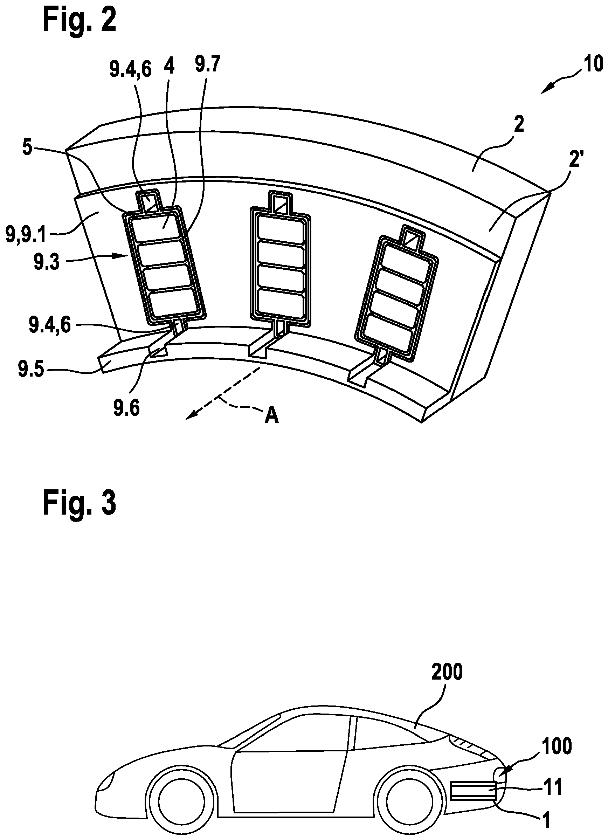

In Fig. 1 (a) ist ein Teil des Stators 1 dargestellt. Zu erkennen ist ein Statorblechpaket 2 mit drei Statornuten 3. In den Statornuten 3 sind elektrische Leiter 4, vorzugsweise Teile einer Hairpin-Wicklung, angeordnet. Zwischen den elektrischen Leitern 4 und dem Statorblechpaket 2 sind elektrisch isolierende Nutisolationen 5 vorgesehen, welche vorzugsweise aus PEEK hergestellt sind. Die Nutisolationen 5 sind fluiddicht. Hierdurch ist es möglich, dass eine Kühlflüssigkeit, beispielsweise ein Öl, durch die Nutisolationen 5 strömt und die in Innenräumen 5' der Nutisolationen 5 angeordneten elektrischen Leiter 4 direkt beaufschlagt und kühlt. Durch die Fluiddichtigkeit der Nutisolationen 5 wird effektiv verhindert, dass die Kühlflüssigkeit durch Nutschlitze 7 in einen Bereich zwischen dem Stator 1 und einem Rotor (s. Fig. 3), den sogenannten Luftspalt, gelangt und dort zu starken Reibungsverlusten führt.

Zur Verringerung des Strömungswiderstandes, welcher der durchströmenden Kühlflüssigkeit entgegenwirkt, sind in radialer Richtung R zu den elektrischen Leitern 4 beabstandete Kühlkanäle 6 vorgesehen. Durch den geringeren Strömungswiderstand ist die Verwendung kleinerer, leichterer und günstigerer Pumpen zur Erzeugung des Kühlflüssigkeitsstromes möglich. In der hier gezeigten Ausführungsform sind Kühlkanäle 6 in jochseitigen Aussparungen 8 des Statorblechpakets 2 und in den Nutschlitzen 7 vorgesehen. Hierdurch wird eine gleichmäßige Kühlung der elektrischen Leiter 4 bewirkt.

Zur besseren mechanischen Stützung der elektrischen Leiter 4 ist vorgesehen, dass die Kühlkanäle 6 in Umlaufrichtung U weniger Ausdehnung aufweisen, als die elektrischen Leiter 4.

Fig. 1 (b) zeigt einen Teil eines Stators 1 gemäß einer weiteren bevorzugten Ausführungsform der vorliegenden Erfindung. Der Stator 1 weist, wie der in Fig. 1 (a) gezeigte, ebenfalls in den Statornuten 3 angeordnete elektrische Leiter 4 auf. Um die elektrischen Leiter 4 herum sind die Nutisolationen 5 mit den in radialer Richtung R von den elektrischen Leitern beabstandeten Kühlkanälen 6 in den Nutschlitzen 7 und den jochseitigen Aussparungen 8 des Statorblechpakets 2 angeordnet.

Das hier gezeigte Ausführungsbeispiel unterscheidet sich von dem in Fig. 1 (a) darin, dass zwischen den Kühlkanälen 6 und den Innenräumen 5' der Nutisolationen 5, in welchen die elektrischen Leiter 4 angeordnet sind, Trennwände 6' angeordnet sind. Die Trennwände 6' sind fluiddicht und verhindern, dass Kühlflüssigkeit von den Kühlkanälen 6 in die Innenräume 5 gelangt.

Durch die indirekte Kühlung der elektrischen Leiter 4 ergibt sich zwar eine leichte Verschlechterung der Kühleffizienz gegenüber dem in Fig. 1 (a) gezeigten Ausführungsbeispiel, jedoch erhöhen die Trennwände 6' die Steifigkeit der Nutisolationen 5 deutlich, was zu einem verbesserten Handling bei der Fertigung des Stators 1 beiträgt.

**Fig. 2** illustriert schematisch ein Detail eines Stators 1 gemäß einer beispielhaften Ausführungsform der vorliegenden Erfindung in perspektivischer Darstellung. Zu erkennen ist eine an einer Stirnseite 2' des Statorblechpakets 2 angeordnete elektrisch isolierende und fluiddichte Stirnscheibe 9.

Die Stirnscheibe 9 weist einen radialen Teil 9.1 auf, welcher fluiddicht mit der Stirnseite 2' verbunden ist. Der radiale Teil 9.1 weist Öffnungen 9.3 zum Durchführen der elektrischen Leiter 4 aus den Statornuten (s. Fig. 1 (a), (b)) in einen Wickelkopfbereich 10 auf. Weiterhin weist der radiale Teil 9.1 weitere Öffnungen 9.4 auf, durch welche die Kühlkanäle 6 mit dem Wickelkopfbereich 10 verbunden sind.

Um ein hohes Maß an Dichtigkeit zu gewährleisten und zu verhindern, dass Kühlflüssigkeit aus dem Wickelkopfbereich 10 zwischen die Stirnscheibe 9 und die Stirnseite 2' gelangt, sind die Ränder der Öffnungen 9.3 und die Ränder der weiteren Öffnungen 9.4 mit den Nutisolationen 5 fluiddicht verbunden.

Ferner weist der Stator 2 im Bereich der Öffnungen 9.3 Abdichtungen 9.7 auf, welche ein Eindringen von Kühlflüssigkeit von dem Wickelkopfbereich 10 in die Innenräume (s. Fig. 1 (a), (b)) verhindern.

Die Stirnscheibe 9 weist ferner einen axialen Teil 9.5 auf, welcher sich in axialer Richtung A erstreckt. Der axiale Teil 9.5 verhindert, dass Kühlflüssigkeit aus dem Wickelkopfbereich 10 in einen (nicht gezeigten) Rotorraum und somit in den Luftspalt gelangen kann. Zur weiteren Verringerung des Strömungswiderstandes weist der axiale Teil 9.5 Kanäle 9.6 auf, welche sich in axialer Richtung A vor den Kühlkanälen 6 erstrecken, welche in den Nutschlitzen (s. Fig. 1 (a), (b)) angeordnet sind.

**Fig. 3** illustriert schematisch ein Kraftfahrzeug 200 gemäß einer beispielhaften Ausführungsform der vorliegenden Erfindung mit einer elektrischen Maschine 100 gemäß einer beispielhaften Ausführungsform der vorliegenden Erfindung.

Die elektrische Maschine 100 weist einen Rotor 11 und einen Stator gemäß einer beispielhaften Ausführungsform der vorliegenden Erfindung auf.

### Bezugszeichenliste

- 1: Stator
- 2: Statorblechpaket
- 2': Stirnseite
- 3: Statornut
- 4: elektrischer Leiter
- 5: Nutisolation
- 5': Innenraum
- 6: Kühlkanal
- 6': Trennwand
- 7: Nutschlitz
- 8: Aussparung
- 9: Stirnscheibe
- 9.1: radialer Teil
- 9.3: Öffnung
- 9.4: weitere Öffnung
- 9.5: axialer Teil
- 9.6: Kanal
- 9.7: Abdichtung
- 10: Wickelkopfbereich
- 11: Rotor
- 100: elektrische Maschine
- 200: Kraftfahrzeug
- A: axiale Richtung
- R: radiale Richtung
- U: Umlaufrichtung

## Patentansprüche

1. Stator (1) für eine elektrische Maschine (100), aufweisend ein Statorblechpaket (2), wobei das Statorblechpaket (2) entlang einer zu einer Statorachse parallelen axialen Richtung (A) angeordnete Statornuten (3) aufweist, wobei in den Statornuten (3) elektrische Leiter (4) angeordnet sind, wobei zwischen den elektrischen Leitern (4) und dem Statorblechpaket (2) in den Statornuten (3) fluiddichte Nutisolationen (5) angeordnet sind, wobei die Nutisolationen (5) jeweils einen in einer zur axialen Richtung (A) orthogonal angeordneten radialen Richtung (R) zu den elektrischen Leitern (4) beabstandeten Kühlkanal (6) aufweisen, wobei die Kühlkanäle (6) in Nutschlitzen (7) des Statorblechpakets (2) und in jochseitigen Aussparungen (8) des Statorblechpakets (2) angeordnet sind,
**dadurch gekennzeichnet, dass**
die Kühlkanäle (6) in Umlaufrichtung (U) eine geringere Ausdehnung aufweisen als die elektrischen Leiter (4), wobei
die jochseitigen Aussparungen (8) in Umlaufrichtung (U) eine geringere Ausdehnung aufweisen als die elektrischen Leiter (4).

2. Stator (1) nach Anspruch 1, wobei die elektrischen Leiter (4) in Innenräumen (5') der Nutisolationen angeordnet sind, wobei die Kühlkanäle (6) mit den Innenräumen (5') fluidisch verbunden sind.

3. Stator (1) nach Anspruch 1, wobei die elektrischen Leiter (4) in Innenräumen (5') der Nutisolationen (5) angeordnet sind, wobei die Kühlkanäle (6) von den Innenräumen (5') fluidisch dicht getrennt sind.

4. Stator (1) nach einem der vorhergehenden Ansprüche, wobei der Stator (1) an einer Stirnseite (2') des Statorblechpakets eine Stirnscheibe (9) aufweist, wobei die Stirnscheibe (9) einen radialen Teil (9.1) aufweist, wobei eine Haupterstreckungsrichtung des radialen Teils (9.1) in der radialen Richtung (R) angeordnet ist, wobei der radiale Teil (9.1) Öffnungen (9.3) zum Durchführen der elektrischen Leitungen (4) durch den radialen Teil (9.1) von den Statornuten (3) in einen Wickelkopfbereich (10) des Stators (1) und weitere Öffnungen (9.4) zum fluidischen Verbinden der Kühlkanäle (6) mit dem Wickelkopfbereich (10) aufweist.

5. Stator (1) nach Anspruch 4, wobei die Öffnungen (9.3) fluiddichte Abdichtungen (9.7) zwischen dem Wickelkopfraum (10) und den Innenräumen (5') der Kühlkanäle (6) aufweisen.

6. Stator (1) nach einem der Ansprüche 4 bis 5, wobei Ränder der Öffnungen (9.3) mit Rändern der Nutisolationen (5) fluiddicht verbunden sind, wobei die Ränder der Öffnungen (9.3) bevorzugt mit den Rändern der Nutisolationen (5) verschweißt, verklebt oder an die Ränder der Nutisolationen (5) angespritzt sind.

7. Stator (1) nach einem der Ansprüche 4 bis 6, wobei die Stirnscheibe (9) einen axialen Teil (9.5) aufweist, wobei eine Haupterstreckungsrichtung des axialen Teils (9.5) in der axialen Richtung (A) angeordnet ist, wobei der axiale Teil (9.5) Kanäle (9.6) aufweist, wobei die Kanäle (9.6) entlang einer Haupterstreckungsrichtung der Kühlkanäle (6) angeordnet sind.

8. Stator (1) nach einem der Ansprüche 4 bis 7, wobei die Stirnscheibe (9), insbesondere der radiale Teil (9.1), mit der Stirnseite (2') des Statorblechpakets (2) verklebt oder an die Stirnseite (2') des Statorblechpakets (2) angespritzt ist.

9. Elektrische Maschine (100) aufweisend einen Stator (1) nach einem der vorhergehenden Ansprüche.

10. Kraftfahrzeug (200) aufweisend eine elektrische Maschine (100) nach Anspruch 9.

## Claims

1. Stator (1) for an electrical machine (100), having a stator laminated core (2), the stator laminated core (2) having stator slots (3) arranged along an axial direction (A) parallel to a stator axis, electrical conductors (4) being arranged in the stator slots (3), wherein fluid-tight slot insulations (5) are arranged between the electrical conductors (4) and the stator laminated core (2) in the stator slots (3), wherein the slot insulations (5) each comprise a cooling channel (6) spaced apart from the electrical conductors (4) in a radial direction (R) orthogonal to the axial direction (A), wherein
the cooling channels (6) are arranged in slots (7) of the stator laminated core (2) and in yoke-side recesses (8) of the stator laminated core (2), **characterised in that**
the cooling channels (6) have a smaller extension in the direction of rotation (U) than the electrical conductors (4), wherein
the yoke-side recesses (8) have a smaller extension in the direction of rotation (U) than the electrical conductors (4).

2. Stator (1) according to claim 1, wherein the electrical conductors (4) are arranged in inner spaces (5') of the slot insulations, wherein the cooling channels (6) are fluidically connected to the inner spaces (5').

3. Stator (1) according to claim 1, wherein the electrical conductors (4) are arranged in inner spaces (5') of the slot insulations (5), wherein the cooling channels (6) are separated from the inner spaces (5') in a fluid-tight manner.

4. Stator (1) according to one of the preceding claims, wherein the stator (1) has an end disk (9) on an end face (2') of the stator laminated core, wherein the end disk (9) comprises a radial part (9.1), wherein a. main direction of extension of the radial part (9.1) is arranged in the radial direction (R), wherein the radial part (9.1) has openings (9.3) for passing the electrical leads' (4) through the radial part (9.1) from the stator slots (3) into a winding head region (10) of the stator (1) and further openings (9.4) for fluidic connection of the cooling channels (6) to the winding head region (10).

5. Stator (1) according to claim 4, wherein the openings (9.3) comprise fluid-tight seals (9.7) between the winding head space (10) and the inner spaces (5') of the cooling channels (6).

6. Stator (1) according to one of claims 4 to 5, wherein edges of the openings (9.3) are connected to edges of the slot insulations (5) in a fluid-tight manner, wherein the edges of the openings (9.3) are preferably welded, glued or molded to the edges of the slot insulations (5).

7. The stator (1) according to one of claims 4 to 6, wherein the face disk (9) comprises an axial part (9.5), wherein a main extension direction of the axial part (9.5) is arranged in the axial direction (A), wherein the axial part (9.5) comprises channels (9.6), wherein the channels (9.6) are arranged along a main extension direction of the cooling channels (6).

8. Stator (1) according to one of claims 4 to 7, wherein the end plate (9), in particular the radial part (9.1), is bonded to the end face (2') of the stator laminated core (2) or is molded onto the end face (2') of the stator laminated core (2).

9. Electric machine (100) comprising a stator (1) according to one of the preceding claims.

10. A motor vehicle (200) comprising an electric machine (100) according to claim 9.

## Revendications

1. Stator (1) pour une machine électrique (100), ayant un noyau stratifié de stator (2), le noyau stratifié de stator (2) ayant des encoches de stator (3) agencées le long d'une direction axiale (A) parallèle à un axe de stator, des conducteurs électriques (4) qui sont agencés dans les encoches de stator (3), dans lequel des isolations d'encoches étanches aux fluides (5) sont agencées entre les conducteurs électriques (4) et le noyau stratifié de stator (2) dans les encoches de stator (3), dans lequel les isolations d'encoche (5) comprennent chacune un canal de refroidissement (6) espacé des conducteurs électriques (4) dans une direction radiale (R) orthogonale à la direction axiale (A), dans lequel
les canaux de refroidissement (6) sont agencés dans des encoches (7) du noyau stratifié de stator (2) et dans des évidements côté culasse (8) du noyau stratifié de stator (2), **caractérisé en ce que**
les canaux de refroidissement (6) ont une extension plus petite dans le sens de rotation (U) que les conducteurs électriques (4), dans lequel
les évidements côté culasse (8) ont une extension plus petite dans le sens de rotation (U) que les conducteurs électriques (4).

2. Stator (1) selon la revendication 1, dans lequel les conducteurs électriques (4) sont agencés dans des espaces intérieurs (5') des isolations d'encoches, dans lequel les canaux de refroidissement (6) sont en communication fluidique avec les espaces intérieurs (5').

3. Stator (1) selon la revendication 1, dans lequel les conducteurs électriques (4) sont agencés dans des espaces intérieurs (5') des isolations d'encoches (5), dans lequel les canaux de refroidissement (6) sont séparés des espaces intérieurs (5') de manière étanche aux fluides.

4. Stator (1) selon l'une quelconque des revendications précédentes, dans lequel le stator (1) a un disque d'extrémité (9) sur une face d'extrémité (2') du noyau stratifié de stator, dans lequel le disque d'extrémité (9) comprend une partie radiale (9.1), dans lequel une direction principale d'extension de la partie radiale (9.1) est agencée dans la direction radiale (R), dans lequel la partie radiale (9.1) a des ouvertures (9.3) pour faire passer les conducteurs électriques (4) à travers la partie radiale (9.1) depuis les encoches de stator (3) dans une région de tête d'enroulement (10) du stator (1) et d'autres ouvertures (9.4) pour une communication fluidique des canaux de refroidissement (6) avec la région de tête d'enroulement (10).

5. Stator (1) selon la revendication 4, dans lequel les ouvertures (9.3) comprennent des joints étanches aux fluides (9.7) entre l'espace de tête d'enroulement (10) et les espaces intérieurs (5') des canaux de refroidissement (6).

6. Stator (1) selon l'une des revendications 4 et 5, dans lequel les bords des ouvertures (9.3) sont raccordés de manière étanche aux fluides aux bords des isolations d'encoches (5), dans lequel les bords des ouvertures (9.3) sont de préférence soudés, collés, ou moulés aux bords des isolations d'encoches (5).

7. Stator (1) selon l'une des revendications 4 à 6, dans lequel le disque (9) frontal comprend une partie axiale (9.5), dans lequel une direction d'extension principale de la partie axiale (9.5) est agencée dans la direction axiale (A), dans lequel la partie axiale (9.5) comprend des canaux (9.6), dans lequel les canaux (9.6) sont agencés le long d'une direction d'extension principale des canaux de refroidissement (6).

8. Stator (1) selon l'une des revendications 4 à 7, dans lequel la plaque d'extrémité (9), en particulier la partie radiale (9.1), est liée à la face d'extrémité (2') du noyau stratifié de stator (2) ou est moulée sur la face d'extrémité (2') du noyau stratifié de stator (2).

9. Machine électrique (100) comprenant un stator (1) selon l'une des revendications précédentes.

10. Véhicule à moteur (200) comprenant une machine électrique (100) selon la revendication 9.
